# EUROPÄISCHE PATENTANMELDUNG

(11) **EP 3 959 970 A1**
(43) Veröffentlichungstag der Anmeldung: **02.03.2022**
(21) Anmeldenummer: 21158304.2
(22) Anmeldetag: 19.02.2021
(51) Int. Cl.: A01K 13/00

(54) **DECKE FÜR HAUS- ODER NUTZTIERE, INSBESONDERE FÜR PFERDE**

(30) Priorität: 28.08.2020 DE 102020122619
(71) Anmelder: Krämer Pferdesport GmbH & Co. KG, 68764 Hockenheim (DE)
(72) Erfinder: SCHMECKENBECHER, Jennifer, 68764 Hockenheim (DE)
(74) Vertreter: Beyer, Carsten

(57) **Zusammenfassung**

Die vorliegende Erfindung betrifft eine Decke (2) für Haus- oder Nutztiere (4), insbesondere für Pferde (6). Insbesondere betrifft die Erfindung eine Pferdedecke (14) oder Hundedecke mit variabel austauschbarer Wattierung. Der Erfindung liegt die Idee zugrunde, innerhalb einer Decke (2) für Tiere (4) eine oder mehrere zusätzliche Wattierungslagen (24.1, 24.2) nach Bedarf und temporär anbringen und wieder entfernen zu können. Die Decke (2) ist dazu zumindest bereichsweise zweilagig ausgebildet und weist eine Außendecke (8) und ein Innenfutter (16) auf, wobei zwischen der Außendecke (8) und dem Innenfutter (16) zumindest bereichsweise ein von außen zugänglicher Zwischenraum (18) ausgebildet ist, in den eine oder mehrere zusätzliche Wattierungslagen (24.1, 24.2) einlegbar sind. Eine erfindungsgemäße Wattierungslage (24.1, 24.2) weist auf ihrer Außenseite und/oder auf ihrer Innenseite Fixierungsmittel (26) auf.

## Beschreibung

Die vorliegende Erfindung betrifft eine Decke für Haus- oder Nutztiere, insbesondere für Pferde, nach dem Oberbegriff von Anspruch 1.

Insbesondere betrifft die Erfindung eine Pferde- oder Hundedecke mit variabel austauschbaren Wattierungslagen.

Des Weiteren betrifft die vorliegende Erfindung eine Wattierungslage für eine solche Decke, nach dem Oberbegriff von Anspruch 13.

Bisher auf dem Reitsportmarkt erhältliche Pferdedecken verfügen teilweise über separate Innendecken. Bei allen auf dem Markt bekannten Modellen besteht ausschließlich die Möglichkeit, eine zusätzliche Innendecke an der Außendecke zu befestigen. Die Innendecke liegt direkt auf dem Pferderücken auf und besitzt einen eigenen Brustverschluss sowie weitere Befestigungen zur Außendecke.

Die tägliche Anbringung der bisher verfügbaren Pferdedecken ist aufwändig, da zunächst immer der Brustverschluss der Innendecke verschlossen werden muss, und nachträglich auch der Brustverschluss der darüber liegenden Außendecke. Zudem muss die Innendecke oftmals auch noch durch weitere Schnallen und Verschlüsse mit der Außendecke verbunden werden.

Der vorliegenden Erfindung liegt die Aufgabe zugrunde, die sich aus dem Stand der Technik ergebenden Nachteile zu überwinden.

Ferner liegt die Aufgabe zugrunde, eine Decke für Haus- oder Nutztiere, insbesondere für Pferde oder auch Hunde, anzugeben, welche bei verbessertem Tragekomfort und verbesserter Schutzwirkung einfach und flexibel einsetzbar ist.

Einen Beitrag zur Lösung der vorstehend genannten Aufgaben leistet zunächst eine Decke der eingangs genannten Art, welche durch die kennzeichnenden Merkmale des Anspruchs 1 weitergebildet ist.

Danach ist die Decke so ausgestaltet, dass die Decke zumindest bereichsweise zweilagig ausgebildet ist und eine Außendecke und ein Innenfutter aufweist, wobei zwischen der Außendecke und dem Innenfutter zumindest bereichsweise ein von außen zugänglicher Zwischenraum ausgebildet ist, in den eine oder mehrere zusätzliche Wattierungslagen einlegbar sind.

Einen Beitrag zur Lösung der vorstehend genannten Aufgaben leistet ferner eine solche Wattierungslage, welche durch die kennzeichnenden Merkmale des Anspruchs 13 weitergebildet ist.

Danach ist die Wattierungslage so ausgestaltet, dass die Wattierungslage auf ihrer Außenseite und/oder auf ihrer Innenseite Fixierungsmittel aufweist.

Vorteilhafte Ausgestaltungen und Weiterbildungen der Erfindung sind Gegenstand der jeweils nachgeordneten Ansprüche.

Der Erfindung liegt die Idee zugrunde, zwischen einer Außendecke und einem Innenfutter einer Decke eine oder mehrere zusätzliche Lagen, insbesondere Wattierungslagen (Wattierungen), nach Bedarf und temporär anbringen und wieder entfernen zu können.

Als Unterseite oder Innenseite der erfindungsgemäßen Decke bzw. der erfindungsgemäßen Wattierungslage wird im Rahmen der vorliegenden Erfindung stets die Seite der Decke bzw. der Wattierungslage angesehen, welche beim bestimmungsgemäßen Gebrauch dem Tier zugewandt ist. Entsprechend wird als Oberseite oder Außenseite die dem Tier abgewandte Seite bezeichnet.

Das Innenfutter der erfindungsgemäßen Decke kann auch als Innenseite, Innendecke, oder dergleichen bezeichnet bzw. ausgestaltet werden, ohne vom Erfindungsgedanken abzuweichen.

Eine erfindungsgemäße Wattierungslage kann auch als Wattierung, Zusatzdecke, Zwischendecke, Einziehdecke, Innendecke, Linerdecke, oder dergleichen bezeichnet werden, ohne vom Erfindungsgedanken abzuweichen.

Angaben in "g" (Gramm) in Bezug auf eine erfindungsgemäße Wattierungslage sind im Bereich von Pferdedecken gebräuchlich und meinen dabei jeweils die spezifische Masse einer Füllung der betreffenden Decke bzw. vorliegend einer Wattierungslage in g/m².

Im Folgenden werden die erfindungsgemäßen Aspekte weiter erörtert, wozu teilweise auf nicht limitierende vorteilhafte Ausgestaltungen, Weiterbildungen und Ausführungsbeispiele der Erfindung Bezug genommen wird. Die Merkmale vorteilhafter Ausgestaltungen, Weiterbildungen und Ausführungsbeispiele lassen sich dabei einzeln oder auch in beliebiger Kombination realisieren, wodurch weitere vorteilhafte Ausgestaltungen der Erfindung geschaffen werden.

Die erfindungsgemäße Decke weist zwischen einer Außendecke und einem Innenfutter einen zumindest bereichsweise ausgebildeten, von außen zugänglichen Zwischenraum auf, in den nach Wunsch des Benutzers eine oder mehrere zusätzliche Wattierungslagen eingelegt werden können. Diese Wattierungslagen können demgegenüber nach Wunsch jederzeit auch wieder entfernt werden.

Vorzugsweise ist dieser Zwischenraum durch eine Öffnung zugänglich, welche bpsw. von einem Reißverschluss gebildet bzw. verschlossen werden kann.

Die erfindungsgemäße Decke ist dazu vorzugsweise zumindest bereichsweise zweilagig ausgebildet, mit einer Außendecke und einem Innenfutter. Zwischen der Außendecke und dem Innenfutter können dann vorzugsweise nach Bedarf und reversibel eine oder mehrere zusätzliche Wattierungslagen (Wattierungen) eingebracht werden.

Eine Wattierung ist dabei vorzugsweise flach und besitzt die Form einer zusätzlichen Zwischenlage der Decke.

Eine Wattierung kann die gemeinsame Fläche zwischen der Außendecke und dem Innenfutter teilweise, größtenteils oder vollständig ausfüllen.

Die Erfindung betrifft auch eine genannte Decke mit Außendecke und Innenfutter, welche zwischen Außendecke und Innenfutter eine oder mehrere zusätzliche Wattierungen aufweist.

Ferner betrifft die Erfindung auch eine Wattierung, nämlich eine Wattierungslage, für eine solche Decke.

Die erfindungsgemäße Decke verfügt demnach vorzugsweise über eine Außendecke und ein Innenfutter mit einer oder mehreren optional herausnehmbaren und austauschbaren Wattierungen.

Die Anbringung der Wattierung erfolgt vorzugsweise durch Klettverschlüsse, Druccknöpfe, Reißverschlüsse oder ähnliches zwischen der Außendecke und der Wattierung und/oder zwischen dem Innenfutter und der Wattierung.

Zwischen Außendecke und Innenfutter besteht vorzugsweise mindestens an einer Stelle eine durch Reißverschluss, Klettverschluss, Druckknöpfe, etc. wieder verschließbare Öffnung.

Der Reißverschluss kann vorzugsweise im Wesentlichen über die gesamte Länge der Decke verlaufen.

Durch die Öffnung kann/können ein oder mehrere Wattierungen in den Zwischenraum (zwischen Außendecke und Innenfutter) mithilfe einer oder mehrerer Klettverschlüsse und/oder Druckknöpfe und/oder Reißverschlüsse, etc. eingebracht werden.

Zum Einbringen einer Wattierung kann die Decke vorzugsweise mit der Unterseite nach oben auf den Boden oder einen Tisch gelegt werden, und der Benutzer kann nach Wunsch in den Zwischenraum zwischen Außendecke und Innenfutter hineinschlüpfen oder hineingreifen, um die Wattierung(en) dort, insbesondere in den Ecken, passend in den Zwischenraum einzulegen, und ggf., insbesondere mit Klettbereichen, an der Außendecke und/oder dem Innenfutter reversibel festzulegen.

Die Öffnung zwischen Außendecke und Innenfutter wird vorzugsweise durch einen oder mehrere Reißverschlüsse und/oder Klettverschlüsse, und/oder Druckknöpfe, oder ähnliches, wieder verschlossen.

Die herausnehmbare/n Wattierung/en benötigen aufgrund der Position zwischen Außendecke und Innenfutter keine Brustverschnallung und keine Bauchverschnallung (Bauchgurte, Bauchlatz, etc.), da die Wattierung durch die oben beschriebene verschlossene Unterbringung zwischen Außendecke und Innenfutter nicht zusätzlich durch eine Brustverschnallung und/oder Bauchverschnallung am Tier befestigt werden muss.

Die Decke kann sowohl ohne zusätzliche Wattierung, als auch mit einer oder mehreren Wattierungslagen verwendet werden. Dadurch kann ein und dieselbe Außendecke, je nach individueller Wahl der Wattierung, an unterschiedlichste Außentemperaturen angepasst werden.

Durch die in sich geschlossene Unterbringung der Wattierung zwischen Außendecke und Innendecke entfällt das übliche mehrfache Verschnallen der Decke, wie dies bei bisherigen Kombinationsdecken notwendig ist.

Im Gegensatz hierzu muss bei der vorliegenden Erfindung auch bei gleichzeitiger Verwendung der Wattierung/en immer nur der Brustverschluss der Außendecke verschlossen werden. Dies spart Zeit beim täglichen An- und Abdecken des Pferdes.

Des Weiteren werden die Wattierungen nicht verschmutzt, da sie nicht der Außenseite der Decke und auch nicht dem Fell des Pferdes ausgesetzt sind.

Zudem wird durch die geringere Anzahl der von außen zugänglichen Verschlüsse das Verletzungsrisiko minimiert und unangenehme Druckpunkte durch übereinander liegende (Metall-) Verschlüsse verhindert.

Zudem bietet die vorliegende Erfindung die Möglichkeit, mehrere Wattierungen miteinander zu verbinden, um eine noch stärkere Wattierungsstärke zu erlangen.

So kann der Tierhalter z.B. eine Pferdedecke, wenn er bspw. zusätzlich eine 100g und eine 200g Wattierung erwirbt, als Pferdedecke ohne Wattierung, mit 100g Wattierung und mit 200g Wattierung nutzen.

Vorzugsweise wird die erfindungsgemäße Decke direkt in einem Set zusammen mit einer oder mehreren Wattierungslagen angeboten, bspw. zusammen mit einer 100g und mit einer 200g Wattierung.

Der Tierhalter kann vorzugsweise darüber hinaus mehrere Wattierungslagen miteinander verbinden (dies erfolgt vorzugsweise mithilfe des/der angebrachten Klettverschlüsse, Druckknöpfe, Reißverschlüsse, etc.) und somit die Wattierungsstärke weiter erhöhen. Verbindet man z.B. eine 100g und eine 200g Wattierung, kann man in die identische Außendecke also eine Wattierung mit 300g einbringen.

In einer konkreten und besonders bevorzugten Ausführungsform ist die Decke eine Pferdedecke.

Vorzugsweise ist der Zwischenraum über eine Öffnung in der Decke zugänglich.

Besonders bevorzugt ist diese Öffnung reversibel verschließbar ausgebildet.

Vorzugsweise ist die Öffnung mittels eines Reißverschlusses oder mittels Druccknöpfen oder mittels Klettverschlüssen verschließbar.

In einer bevorzugten Weiterbildung erstreckt sich die Öffnung im Wesentlichen über die gesamte Länge der Decke.

In einer weiteren vorteilhaften Ausgestaltung der Decke ist im außerhalb der Öffnung liegenden Bereich der Decke die Außendecke fest mit dem Innenfutter verbunden, insbesondere vernäht.

In vorteilhafter Weise kann sich der Zwischenraum im Wesentlichen über die gesamte gemeinsame Fläche zwischen Außendecke und Innenfutter erstrecken.

Besonders bevorzugt ist eine Ausgestaltung, bei der in den Zwischenraum eine flächig ausgebildete zusätzliche Wattierungslage einlegbar ist.

In weiter vorteilhafter Weise kann in den Zwischenraum eine als zusätzliche Zwischenlage oder als zusätzliche Innendecke ausgeformte Wattierungslage einlegbar sein.

Als besonders vorteilhaft erweist sich eine Weiterbildung der Decke, bei der in den Zwischenraum zwei oder mehrere zusätzliche Wattierungslagen, insbesondere übereinander angeordnet, einlegbar sind.

Die Außendecke der Decke weist bevorzugt in Richtung des Zwischenraums wirkende Fixierungsmittel für eine in den Zwischenraum eingelegte Wattierungslage auf.

Das Innenfutter der Decke weist bevorzugt in Richtung des Zwischenraums wirkende Fixierungsmittel für eine in den Zwischenraum eingelegte Wattierungslage auf.

Solche genannten Fixierungsmittel können in bevorzugter Weise Klettbereiche, Druckknöpfe oder Reißverschlüsse aufweisen.

Vorzugsweise sind ferner Brustgurte und/oder Bauchgurte zum Festlegen der Decke an einem Tier vorgesehen.

Genannte Brustgurte und/oder die Bauchgurte können dabei bevorzugt an der Außendecke befestigt sein.

Eine besonders bevorzugte Ausgestaltung der Erfindung betrifft ferner eine Decke, bei der in den Zwischenraum mindestens eine zusätzliche Wattierungslage eingelegt ist.

In vorteilhafter Weise kann dabei die eingelegte Wattierungslage an der Außendecke und/oder am Innenfutter fixiert sein.

Besonders vorteilhaft ist ferner eine Decke, bei der in den Zwischenraum mindestens zwei übereinander angeordnete zusätzliche Wattierungslagen eingelegt sind.

Eine in die Decke eingelegte Wattierungslage kann dabei bevorzugt auf ihrer Außenseite und/oder auf ihrer Innenseite Fixierungsmittel aufweisen, welche mit vorteilhat vorgesehenen korrespondierenden Fixierungsmitteln der Decke, nämlich mit in Richtung des Zwischenraums wirkenden Fixierungsmitteln der Außendecke, und/oder mit in Richtung des Zwischenraums wirkenden Fixierungsmitteln des Innenfutters, und/oder mit vorteilhaft vorgesehenen Fixierungsmitteln einer oberhalb oder unterhalb der Wattierungslage angeordneten weiteren Wattierungslage, zusammenwirken.

Genannte Fixierungsmittel der Wattierungslage können bevorzugt Klettbereiche, Druckknöpfe oder Reißverschlüsse aufweisen.

Es ist bevorzugt, dass die eingelegte Wattierungslage den Zwischenraum der Decke im Wesentlichen vollständig abdeckt.

Vorzugsweise ist die eingelegte Wattierungslage flächig und/oder als zusätzliche Zwischenlage und/oder als zusätzliche Innendecke ausgeformt.

Weiter bevorzugt kann die Decke aus Polyester, Nylon oder Polypropylen gefertigt sein.

Eine erste konkrete vorteilhafte Ausgestaltung der erfindungsgemäßen Wattierungslage ist so ausgeführt, dass Fixierungsmittel auf der Außenseite der Wattierungslage und Fixierungsmittel auf der Innenseite der Wattierungslage so angeordnet sind, dass die jeweiligen Fixierungsmittel miteinander korrespondieren, sobald eine zweite Wattierungslage mit ihrer Innenseite auf die Außenseite einer ersten Wattierungslage gelegt wird.

Die Fixierungsmittel der Wattierungslage weisen bevorzugt Klettbereiche, Druccknöpfe oder Reißverschlüsse auf.

Bevorzugt ist die Wattierungslage flächig und/oder als zusätzliche Zwischenlage und/oder als zusätzliche Innendecke ausgeformt.

Weiter bevorzugt ist eine Ausgestaltung, in der die Wattierungslage eine isolierende Füllung mit einer spezifischen Masse zwischen 50-400 g/m², und insbesondere von ca. 100 g/m² oder von ca. 200 g/m², aufweist.

Vorzugsweise ist die Wattierungslage aus Polyester oder Nylon gefertigt.

### Ausführungsbeispiele

Die nachfolgenden Ausführungsbeispiele der Erfindung werden beispielhaft und dabei nicht einschränkend aufgeführt.

### Ausführungsbeispiel 1:

4in1 Regularneck Outdoordecke mit Multi-Layer-System, 0-300 g. 4in1 Outdoordecke mit Multi-Layer-System. Eine Decke - viele Möglichkeiten: Außen-Regendecke aus wasserdichtem und atmungsaktivem (Wassersäule 5.000 mm, Atmungsaktivität 3.000 g/m²/24h) sowie robustem 1.200 Denier Polyestermaterial. Im Lieferumfang enthalten sind 2 zusätzliche, gesteppte Innenfüllungen mit einer 100 g und einer 200 g Wattierung. Die Außen-Regendecke besitzt einen langen, verdeckten Reißverschluss entlang des Abtropfstreifens, welcher geöffnet werden kann, um die Innenfüllungen mit Hilfe von Klettverschlüssen in der Decke zu fixieren. An besonders kalten Tagen können zudem beide Füllungen kombiniert werden, sodass eine 300 g Wattierung angebracht werden kann. Somit kann eine einzige Decke als 0 g, 100 g, 200 g und 300 g Outdoordecke eingesetzt werden. Das System ermöglicht eine Nutzung der Innendecken ohne zusätzliche Schnallen, Brustverschlüsse, Bauchgurte, etc. und ist dadurch in der Handhabung und im Gewicht deutlich leichter als klassische Liner-System-Decken. Die Außendecke verfügt über einen doppelten, beidseitig weitenregulierbaren T-Haken-Brustverschluss und einen versteckten Polsterkragen am Halsausschnitt für einen optimalen Tragekomfort. Glattes, fellfreundliches Innenfutter zur Vermeidung von Scheuerstellen. Mit längenverstellbarer Kreuzbegurtung, Schweifriemen und Schweiflatz. Inkl. Vorrichtung zur optionalen Anbringung von Beinschnüren. 100 % Polyester.

### Ausführungsbeispiel 2:

4in1 Highneck Outdoordecke mit Multi-Layer-System, 0-300 g. 4in1 Highneck Outdoordecke mit innovativem Multi-Layer-System. Eine Decke - viele Möglichkeiten: Außen-Regendecke aus wasserdichtem und atmungsaktivem (Wassersäule 5.000 mm, Atmungsaktivität 3.000 g/m²/24h) sowie robustem 1.200 Denier Polyestermaterial. Im Lieferumfang enthalten sind 2 zusätzliche, gesteppte Innenfüllungen mit einer 100 g und einer 200 g Wattierung. Die Außen-Regendecke besitzt einen langen, verdeckten Reißverschluss entlang des Abtropfstreifens, welcher geöffnet werden kann, um die Innenfüllungen mit Hilfe von Klettverschlüssen in der Decke zu fixieren. An besonders kalten Tagen können zudem beide Füllungen kombiniert werden, sodass eine 300 g Wattierung angebracht werden kann. Somit kann eine einzige Decke als 0 g, 100 g, 200 g und 300 g Outdoordecke eingesetzt werden. Das System ermöglicht eine Nutzung der Innendecken ohne zusätzliche Schnallen, Brustverschlüsse, Bauchgurte, etc. und ist dadurch in der Handhabung und im Gewicht deutlich leichter als klassische Liner-System-Decken. Die Außendecke verfügt über einen beidseitig weitenregulierbaren Doppel-Balance-Frontverschluss mit 2 Karabinerhaken und Ring sowie zusätzlichem KV und einen versteckten Polsterkragen am Highneck und Halsausschnitt für einen optimalen Tragekomfort. Glattes, fellfreundliches Innenfutter zur Vermeidung von Scheuerstellen. Mit längenverstellbarer Kreuzbegurtung, Schweifriemen und Schweiflatz. Inkl. Vorrichtung zur optionalen Anbringung von Beinschnüren. 100 % Polyester.

### Figuren

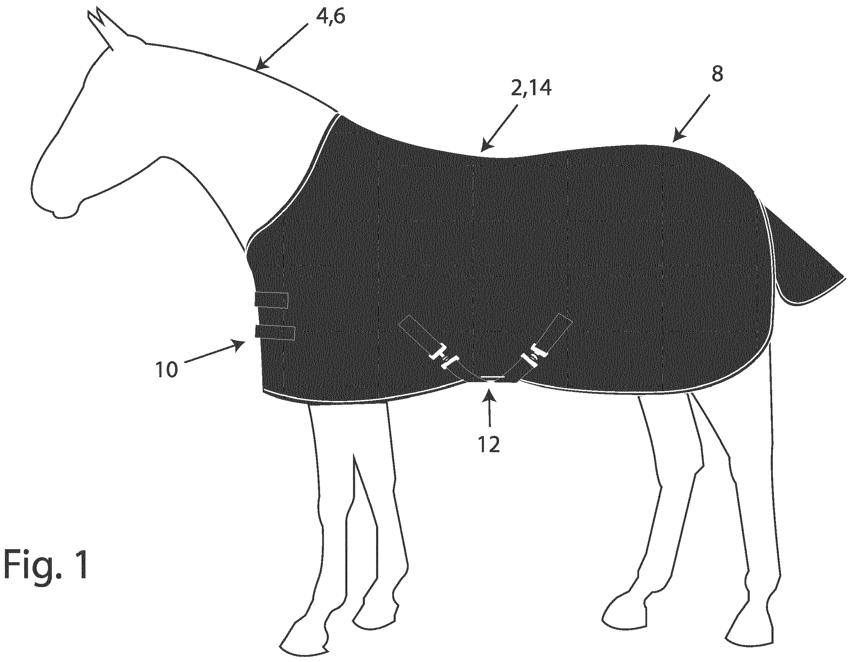

Ergänzend bzw. zusätzlich zu den bereits erörterten vorteilhaften Ausgestaltungen, Weiterbildungen und Ausführungsbeispielen der Lehre werden in der Zeichnung im Umfang der **Figuren 1 bis 7** dargestellte weitere Ausführungsbeispiele der Erfindung im Folgenden näher erläutert. Die anhand der Zeichnung erörterten Beispiele schränken die Erfindung jedoch nicht auf die gezeigten Beispiele ein. Bei der Erörterung der Ausführungsbeispiele anhand der Zeichnung werden auch im Allgemeinen bevorzugte Ausgestaltungen und Weiterbildungen der Lehre aufgezeigt.

Weiterbildungen der vorstehend beschriebenen vorteilhaften Ausgestaltungen, Weiterbildungen und Ausführungsbeispiele mit Merkmalen der nachstehenden Ausführungsbeispiele bilden dabei genau wie Weiterbildungen der nachstehend beschriebenen Ausführungsbeispiele mit Merkmalen der vorstehend beschriebenen Ausgestaltungen, Weiterbildungen und Ausführungsbeispiele ausdrücklich weitere vorteilhafte Ausgestaltungen der Erfindung, und sind damit Teil der vorliegenden Offenbarung.

In Bezug auf die nachstehende Erläuterung der Figuren ist allgemein darauf zu verweisen, dass bereits in vorangegangenen Figuren dargestellte und diesbezüglich bereits weiter oben erläuterte Bezugszeichen aus Gründen der Übersichtlichkeit in darauf folgenden Figuren zum Teil nicht erneut aufgetragen worden sind und/oder anhand dieser nachfolgenden Figuren zum Teil nicht erneut erläutert werden. Für die Erläuterung solcher Bezugszeichen und der zugehörigen technischen Merkmale wird zur Vermeidung von Wiederholungen vollumfänglich auf die jeweilige Beschreibung zu den entsprechenden vorangehenden Figuren verwiesen.

Es zeigen:
Figur 1 in einer seitlichen, teils schematischen Ansicht ein bevorzugtes Ausführungsbeispiel der erfindungsgemäßen Decke, die an einem Pferd angelegt ist,
Figur 2 das Ausführungsbeispiel aus Fig. 1 in einer größeren Darstellung ohne Pferd,
Figur 3 das Ausführungsbeispiel aus Fig. 1 und Fig. 2, wobei zur Veranschaulichung der Erfindung die Decke vom Hals des Pferdes zurückgeschlagen worden ist,
Figur 4 in einer schematischen Darstellung die erste Wattierungslage und die zweite Wattierungslage aus Fig. 3 so, wie sie beim bestimmungsgemäßen Gebrauch im Zwischenraum zwischen Außendecke und Innenfutter übereinander liegen würden,
Figur 5 in einer teils transparenten Darstellung eine Sicht auf die Oberseite der flach ausgebreiteten Decke aus den Fig. 1 bis 3,
Figur 6 in einer teils transparenten Darstellung eine Sicht auf die Unterseite der flach ausgebreiteten Decke aus den Fig. 1 bis 3 und 5, und
Figur 7 die Darstellung aus Fig. 6, wobei hier zur Veranschaulichung die beiden Wattierungslagen teils aus dem Zwischenraum und der Öffnung entfernt dargestellt sind.

**Fig. 1** zeigt ein bevorzugtes Ausführungsbeispiel der erfindungsgemäßen Decke 2, die an einem Tier 4, nämlich einem Pferd 6, angelegt ist.

Hier ist lediglich die Außendecke 8 zu erkennen, die mit Brustgurten 10, welche eine Brustverschnallung ergeben, und mit Bauchgurten 12, welche eine Bauchverschnallung ergeben, reversibel am Pferd 6 angelegt ist. Sowohl die Brustgurte 10 als auch die Bauchgurte 12 sind dabei an der Außendecke 8 festgelegt.

Im Rahmen von Fig. 1 wird somit deutlich, dass es sich bei dem dargestellten Ausführungsbeispiel der erfindungsgemäßen Decke 2 um eine Pferdedecke 14 handelt.

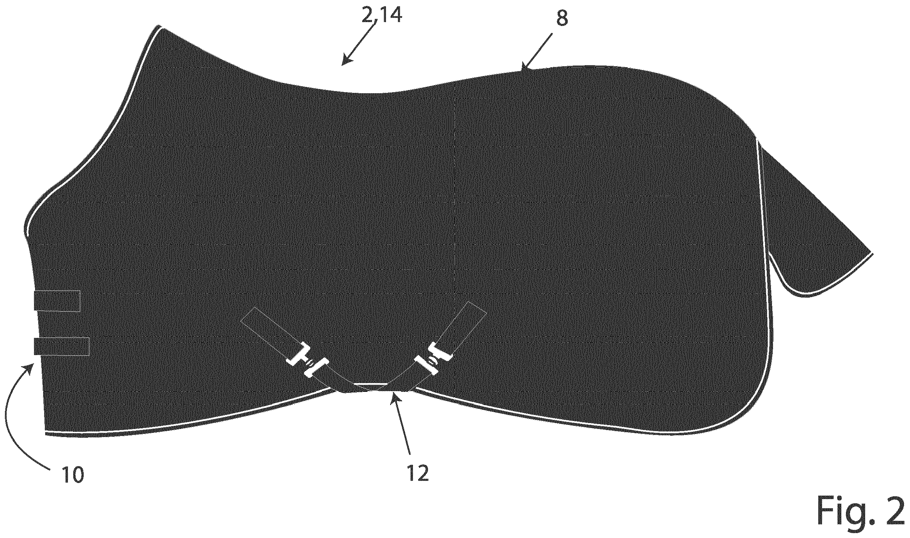

**Fig. 2** zeigt das Ausführungsbeispiel der Decke 2 aus Fig. 1 in einer größeren Darstellung ohne Pferd 6.

Hier sind links oben die Ausnehmung in der Decke 2 für den Hals des Pferds 6 und links unten die Brustgurte 10 zu erkennen.

In der Mitte unten sind die Bauchgurte 12 angeordnet, rechts weist die Decke 2 eine zusätzliche Abdeckung für den Schweif des Pferds 6 in Form einer Zunge an der Außendecke 8 auf.

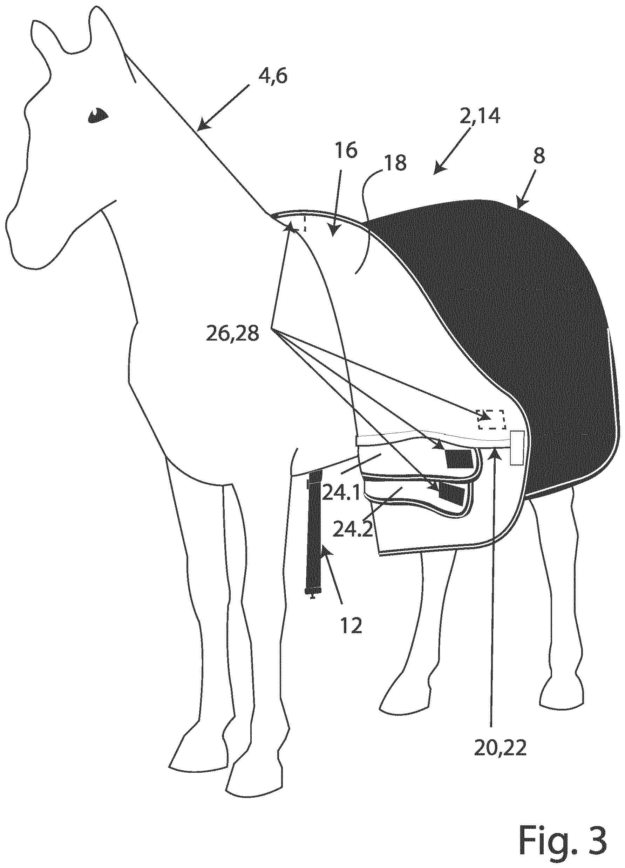

**Fig. 3** zeigt das Ausführungsbeispiel der Decke 2 aus den Fig. 1 und 2 auf dem Pferd 6, wobei die Gurte 10, 12 gelöst sind. Zur Veranschaulichung ist die Decke 2 vom Hals des Pferds 6 zurückgeschlagen worden. Dadurch sind hier neben der Außendecke 8 erstmalig auch gut das Innenfutter 16 und die Abgrenzung des Zwischenraums 18 zwischen Außendecke 8 und Innenfutter 16 mit der Öffnung 20 des Zwischenraums 18 zu erkennen. Die Öffnung 20 ist hier durch einen Reißverschluss 22 öffen- und schließbar.

Somit ist zwischen der Außendecke 8 und dem Innenfutter 16 zumindest bereichsweise ein von außen zugänglicher Zwischenraum 18 ausgebildet, in den eine oder mehrere zusätzliche Wattierungslagen 24.1, 24.2 einlegbar sind. Dabei ist der Zwischenraum 18 über die Öffnung 20 zugänglich.

In den Zwischenraum 18 zwischen Außendecke 8 und Innenfutter 16, welcher durch den Reißverschluss 22 in reversibler Weise öffen- und verschließbar ist, sind hier zwei zusätzliche Wattierungslagen 24.1, 24.2 (Wattierungen) übereinander eingelegt worden. Die erste Wattierungslage 24.1 sowie die zweite Wattierungslage 24.2 sind hier lediglich zur Veranschaulichung etwas aus dem Zwischenraum 18 bzw. aus der Öffnung 20 herausgezogen worden. Beim bestimmungsgemäßen Einsatz wären die Wattierungslagen 24.1, 24.2 vollständig im Zwischenraum 18 zwischen Außendecke 8 und Innenfutter 16 eingelegt und dadurch aus diesem Blickwinkel vollständig von dem Innenfutter 16 bzw. dem dann geschlossenen Reißverschluss 22 bedeckt.

Die Wattierungslagen 24.1, 24.2 sind flächig ausgebildet und können vorliegend auch als zusätzliche Zwischenlage oder als zusätzliche Innendecke angesehen werden.

Ferner weist die Decke 2 in Richtung des Zwischenraums 18 wirkende Fixierungsmittel 26 für eine in den Zwischenraum 18 eingelegte Wattierungslage 24.1, 24.2 auf, und die Wattierungslagen 24.1, 24.2 weisen ihrerseits Fixierungsmittel 26 auf, welche in der bestimmungsgemäßen Positionierung einer Wattierungslage 24.1, 24.2 im Zwischenraum 18 mit den Fixierungsmitteln 26 der Decke 2 korrespondieren bzw. in Überdeckung gebracht sind.

Dabei weist die Decke 2 sowohl auf der Außenseite des Innenfutters 16 als auch auf der Innenseite der Außendecke 8 jeweils gegenüberliegende und in Richtung des Zwischenraums 18 wirkende Fixierungsmittel 26 auf.

Dabei wirken die Fixierungsmittel 26 auf der Außenseite des Innenfutters 16 mit korrespondierenden Fixierungsmitteln 26 auf der Innenseite einer eingelegten Wattierungslage 24.1 zusammen, und die Fixierungsmittel 26 auf der Innenseite der Außendecke 8 wirken mit korrespondierenden Fixierungsmitteln 26 auf der Außenseite einer eingelegten Wattierungslage 24.2 zusammen.

Die Fixierungsmittel 26 bestehen hier jeweils aus Klettbereichen 28.

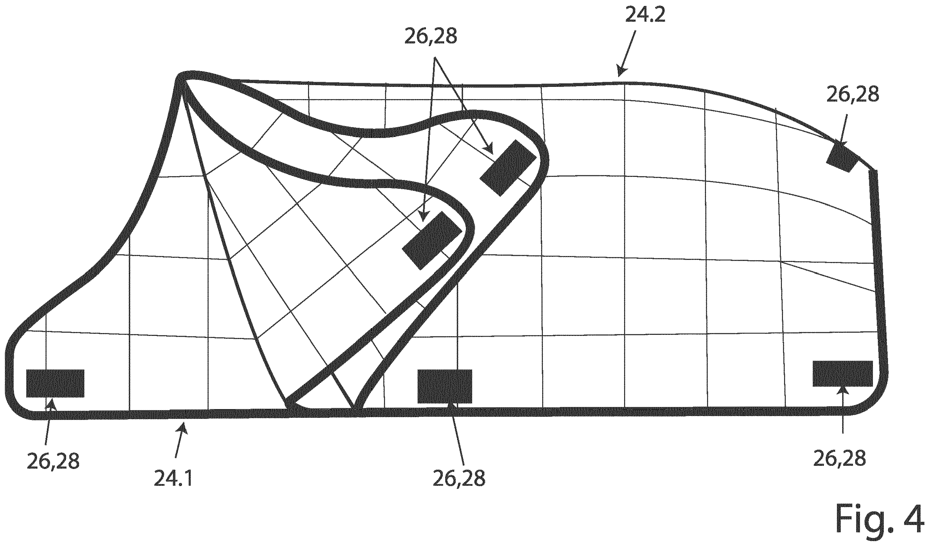

**Fig. 4** zeigt in einer schematischen Darstellung die erste Wattierungslage 24.1 und die zweite Wattierungslage 24.2 aus Fig. 3 so, wie sie beim bestimmungsgemäßen Gebrauch im Zwischenraum 18 zwischen Außendecke 8 und Innenfutter 16 übereinander liegen würden, wobei zur Veranschaulichung die vordere linke Ecke der Wattierungslagen 24.1, 24.2 zurückgeschlagen worden ist.

Dabei wird deutlich, dass die Wattierungslagen 24.1, 24.2 jeweils sowohl auf ihrer Oberseite (Außenseite) als auch auf ihrer Unterseite (Innenseite) Fixierungsmittel 26, hier Klettbereiche 28, aufweisen.

Dabei sind die Fixierungsmittel 26 auf der Außenseite der Wattierungslage 24.1, 24.2 und die Fixierungsmittel 26 auf der Innenseite der Wattierungslage 24.1, 24.2 so angeordnet, dass die jeweiligen Fixierungsmittel 26 miteinander korrespondieren, sobald eine zweite Wattierungslage 24.2 mit ihrer Innenseite auf die Außenseite einer ersten Wattierungslage 24.1 gelegt wird.

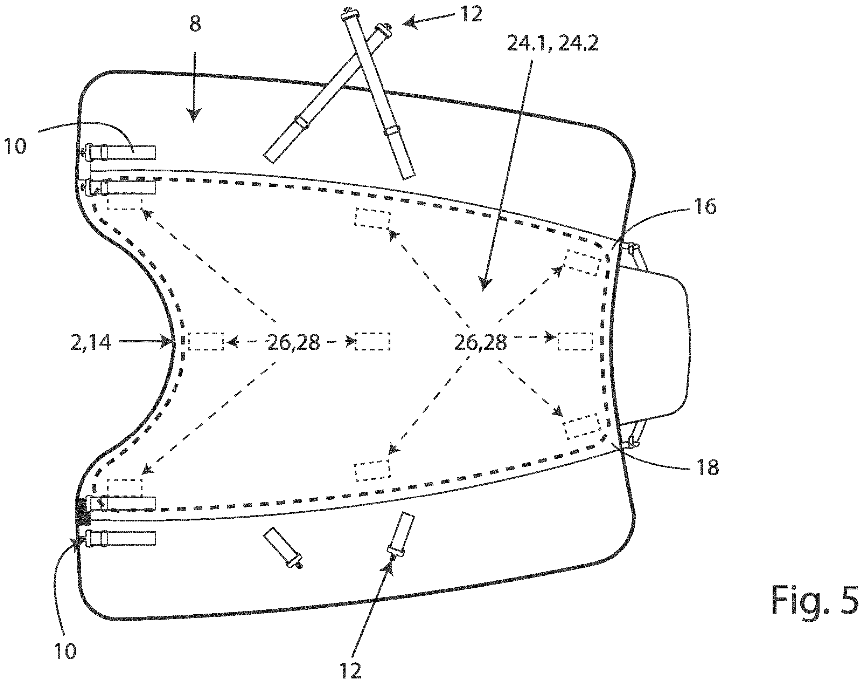

Ferner können die nicht der benachbarten Wattierungslage 24.2, 24.2 zugewandten Fixierungsmittel 26 der Wattierungslagen 24.1, 24.2 mit korrespondierenden Fixierungsmitteln 26 der Decke 2, nämlich mit in Richtung des Zwischenraums 18 wirkenden Fixierungsmitteln 26 der Außendecke 8, und/oder mit in Richtung des Zwischenraums 18 wirkenden Fixierungsmitteln 26 des Innenfutters 16, zusammenwirken. Dies wird insbesondere in den folgenden Fig. 5 bis 7 deutlich.

Durch den identischen Zuschnitt und Größe der Wattierungslagen 24.1, 24.2 passen diese genau aufeinander und können überdies aneinander mit Fixierungsmitteln 26, hier Klettbereichen 28, fixiert werden.

Insofern wird klar, dass praktisch auch beliebig viele Wattierungslagen 24.1, 24.2 in die Decke 2 eingelegt bzw. dort angeordnet werden können, solange der Zwischenraum 18 zwischen Außendecke 8 und Innenfutter 16 hierfür noch genügend flexible Höhe bietet. In der Praxis erscheint die Verwendung von 0 bis 3, insbesondere von 0 bis 2 Wattierungslagen 24.1, 24.2, als sachgerecht.

**Fig. 5** zeigt in einer teils transparenten Darstellung eine Sicht auf die Oberseite der flach ausgebreiteten Decke 2 aus den Fig. 1 bis 3.

Der Umriss der in den Zwischenraum 18 eingelegten zusätzlichen Wattierungslagen 24.1, 24.2 ist dabei gestrichelt dargestellt. Dabei wird deutlich, dass die eingelegten Wattierungslagen 24.1, 24.2 den Zwischenraum 18 bzw. die Grundfläche des Zwischenraums 18 im Wesentlichen vollständig abdecken.

Der Zwischenraum 18 erstreckt sich ferner über einen großen Teil der gemeinsamen Fläche zwischen Außendecke 8 und Innenfutter 16 der Decke 2.

Des Weiteren ist gestrichelt dargestellt die gemeinsame Lage der jeweils korrespondierenden Fixierungsmittel 26, nämlich hier der Klettbereiche 28, sowohl der Decke 2 als auch der zusätzlichen Wattierungslagen 24.1, 24.2.

Die Decke 2 weist hier an insgesamt neun Positionen in Richtung des Zwischenraums 18 wirkende Fixierungsmittel 26 für in den Zwischenraum 18 eingelegte Wattierungslagen 24.1, 24.2 auf, nämlich einerseits auf der Außenseite des Innenfutters 16 und andererseits auf der Innenseite der Außendecke 8.

Passend hierzu weist jede Wattierungslage 24.1, 24.2 an den jeweiligen Positionen in Richtung der Decke 2 bzw. in Richtung einer benachbarten Wattierungslage 24.1, 24.2 wirkende Fixierungsmittel 26 auf.

Somit sind die Wattierungslagen 24.1, 24.2 sicher, aber reversibel lösbar, jeweils sowohl an der Decke 2 als auch an einer etwaig vorhandenen benachbarten Wattierungslage 24.1, 24.2 festgelegt.

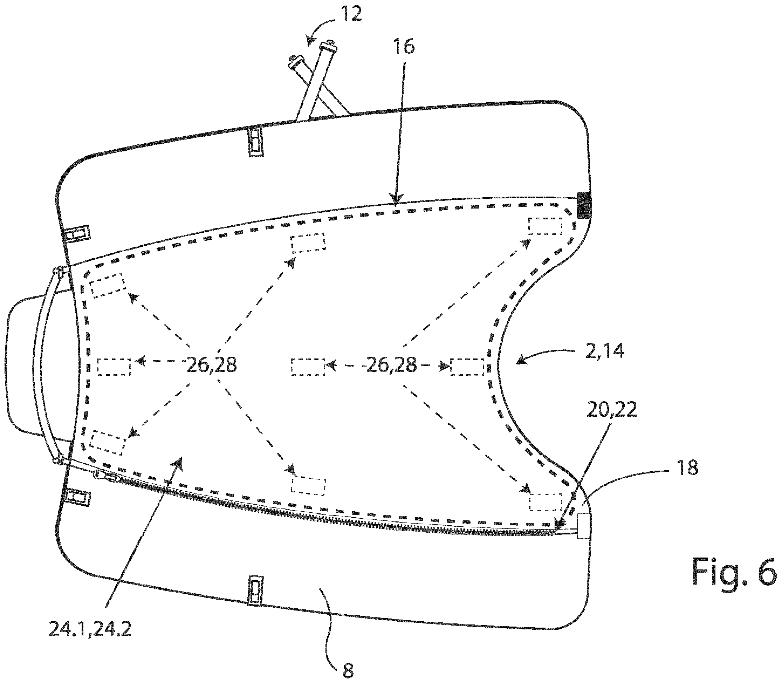

**Fig. 6** zeigt in einer teils transparenten Darstellung eine Sicht auf die Unterseite der flach ausgebreiteten Decke 2 aus den Fig. 1 bis 3 und 5.

In dieser Unteransicht wird zunächst deutlich, dass bei dem dargestellten Ausführungsbeispiel der erfindungsgemäßen Decke 2 sich die Öffnung 20 des Zwischenraums 18 zwischen Außendecke 8 und Innenfutter 16, und damit auch der Reißverschluss 20, im Wesentlichen über die gesamte Länge der Decke 2 erstreckt.

Des Weiteren zeigt sich hier, dass im außerhalb der Öffnung 20 liegenden Bereich der Decke 2 die Außendecke 8 fest mit dem Innenfutter 16 verbunden, nämlich vernäht ist.

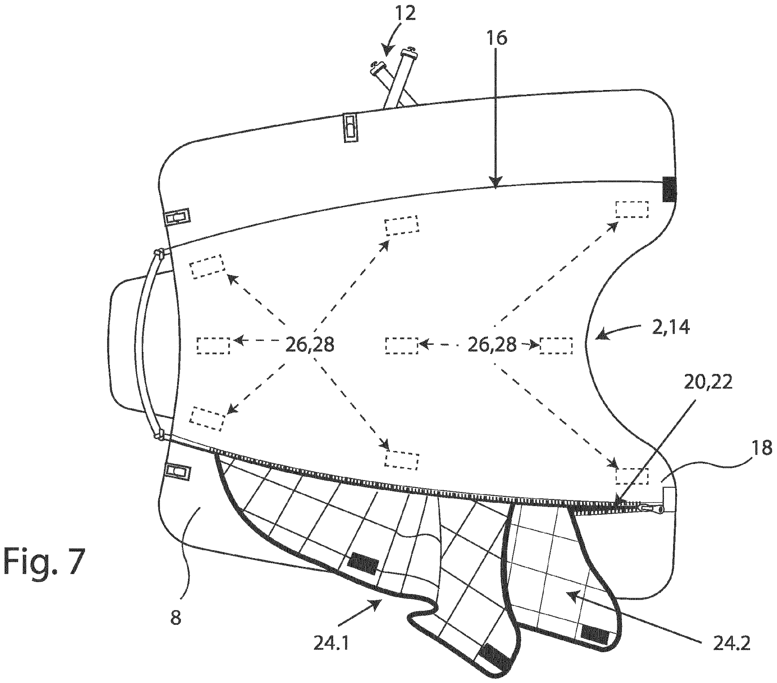

**Fig. 7** zeigt die Darstellung aus Fig. 6, wobei hier zur Veranschaulichung die beiden Wattierungslagen 24.1, 24.2 teils aus dem Zwischenraum 18 und der Öffnung 20 entfernt dargestellt sind.

Hier wird erneut deutlich, dass in den Zwischenraum 18 zwei genau passend übereinander anordenbare zusätzliche Wattierungslagen 24.1, 24.2 eingelegt sind. Ferner zeigt sich, dass die Fixierungsmittel 26 jeder Wattierungslage 24.1, 24.2 bei bestimmungsgemäßer Anordnung genau mit den jeweils korrespondierenden Fixierungsmitteln 26 der Decke 2 bzw. der benachbarten Wattierungslage 24.1, 24.2 in Überdeckung angeordnet ist.

Als Fixierungsmittel 26 sowohl der Decke 2 als auch der Wattierungslagen 24.1, 24.2 besonders geeignet erweisen sich dabei Klettbereiche 28.

### Bezugszeichenliste

- 2: Decke
- 4: Tier, Haus- oder Nutztier
- 6: Pferd
- 8: Außendecke
- 10: Brustgurt
- 12: Bauchgurt
- 14: Pferdedecke
- 16: Innenfutter
- 18: Zwischenraum
- 20: Öffnung
- 22: Reißverschluss
- 24.1: Erste Wattierungslage
- 24.2: Zweite Wattierungslage
- 26: Fixierungsmittel
- 28: Klettbereich (Fixierungsmittel)

## Patentansprüche

1. Decke (2) für Haus- oder Nutztiere (4), insbesondere Pferdedecke (14), **dadurch gekennzeichnet, dass** die Decke (2) zumindest bereichsweise zweilagig ausgebildet ist und eine Außendecke (8) und ein Innenfutter (16) aufweist,
wobei zwischen der Außendecke (8) und dem Innenfutter (16) zumindest bereichsweise ein von außen zugänglicher Zwischenraum (18) ausgebildet ist, in den eine oder mehrere zusätzliche Wattierungslagen (24.1, 24.2) einlegbar sind.

2. Decke (2) nach Anspruch 1, **dadurch gekennzeichnet, dass** der Zwischenraum (18) über eine Öffnung (20) zugänglich ist, insbesondere wobei die Öffnung (20) sich im Wesentlichen über die gesamte Länge der Decke (2) erstreckt.

3. Decke (2) nach Anspruch 2, **dadurch gekennzeichnet, dass** die Öffnung (20) reversibel, insbesondere mittels eines Reißverschlusses (22) oder mittels Druccknöpfen oder mittels Klettverschlüssen, verschließbar ist.

4. Decke (2) nach einem der Ansprüche 2 oder 3, **dadurch gekennzeichnet, dass** im außerhalb der Öffnung (20) liegenden Bereich der Decke (2) die Außendecke (8) fest mit dem Innenfutter (16) verbunden, insbesondere vernäht, ist.

5. Decke (2) nach einem der Ansprüche 1 bis 4, **dadurch gekennzeichnet, dass** der Zwischenraum (18) sich im Wesentlichen über die gesamte gemeinsame Fläche zwischen Außendecke (8) und Innenfutter (16) erstreckt.

6. Decke (2) nach einem der Ansprüche 1 bis 5, **dadurch gekennzeichnet, dass** in den Zwischenraum (18) eine flächig ausgebildete zusätzliche Wattierungslage (24.1, 24.2), insbesondere ausgeformt als zusätzliche Zwischenlage oder als zusätzliche Innendecke, einlegbar ist.

7. Decke (2) nach einem der Ansprüche 1 bis 6, **dadurch gekennzeichnet, dass** in den Zwischenraum (18) zwei oder mehrere zusätzliche Wattierungslagen (24.1, 24.2), insbesondere übereinander angeordnet, einlegbar sind.

8. Decke (2) nach einem der Ansprüche 1 bis 7, **dadurch gekennzeichnet, dass** die Außendecke (8) in Richtung des Zwischenraums (18) wirkende Fixierungsmittel (26) für eine in den Zwischenraum (18) eingelegte Wattierungslage (24.1, 24.2) aufweist, und/oder dass das Innenfutter (16) in Richtung des Zwischenraums (18) wirkende Fixierungsmittel (26) für eine in den Zwischenraum (18) eingelegte Wattierungslage (24.1, 24.2) aufweist, insbesondere wobei die Fixierungsmittel (26) Klettbereiche (28), Druckknöpfe oder Reißverschlüsse aufweisen.

9. Decke (2) nach einem der Ansprüche 1 bis 8, **dadurch gekennzeichnet, dass** in den Zwischenraum (18) mindestens eine zusätzliche Wattierungslage (24.1, 24.2) eingelegt ist, insbesondere wobei die eingelegte Wattierungslage (24.1, 24.2) an der Außendecke (8) und/oder am Innenfutter (16) fixiert ist.

10. Decke (2) nach einem der Ansprüche 1 bis 9, **dadurch gekennzeichnet, dass** in den Zwischenraum (18) mindestens zwei übereinander angeordnete zusätzliche Wattierungslagen (24.1, 24.2) eingelegt sind.

11. Decke (2) nach Anspruch 9 oder 10, **dadurch gekennzeichnet, dass** die eingelegte Wattierungslage (24.1, 24.2) auf ihrer Außenseite und/oder auf ihrer Innenseite Fixierungsmittel (26) aufweist, welche mit korrespondierenden Fixierungsmitteln (26) der Decke (2), nämlich mit in Richtung des Zwischenraums (18) wirkenden Fixierungsmitteln (26) der Außendecke (8), und/oder mit in Richtung des Zwischenraums (18) wirkenden Fixierungsmitteln (26) des Innenfutters (16), und/oder mit Fixierungsmitteln (26) einer oberhalb oder unterhalb der Wattierungslage (24.1, 24.2) angeordneten weiteren Wattierungslage (24.1, 24.2), zusammenwirken.

12. Decke (2) nach einem der Ansprüche 1 bis 11, **dadurch gekennzeichnet, dass** die eingelegte Wattierungslage (24.1, 24.2) den Zwischenraum (18) im Wesentlichen vollständig abdeckt.

13. Wattierungslage (24.1, 24.2) für eine Decke (2) nach einem der Ansprüche 1 bis 12, **dadurch gekennzeichnet, dass** die Wattierungslage (24.1, 24.2) auf ihrer Außenseite und/oder auf ihrer Innenseite Fixierungsmittel (26) aufweist.

14. Wattierungslage (24.1, 24.2) nach Anspruch 13, **dadurch gekennzeichnet, dass** Fixierungsmittel (26) auf der Außenseite der Wattierungslage (24.1, 24.2) und Fixierungsmittel (26) auf der Innenseite der Wattierungslage (24.1, 24.2) so angeordnet sind, dass die jeweiligen Fixierungsmittel (26) miteinander korrespondieren, sobald eine zweite Wattierungslage (24.2) mit ihrer Innenseite auf die Außenseite einer ersten Wattierungslage (24.1) gelegt wird.

15. Wattierungslage (24.1, 24.2) nach Anspruch 13 oder 14, **dadurch gekennzeichnet, dass** die Fixierungsmittel (26) der Wattierungslage (24.1, 24.2) Klettbereiche (28), Druckknöpfe oder Reißverschlüsse aufweisen.
